Europäisches Patentamt

**European Patent Office**

**Office européen des brevets**

(11) Numéro de publication: **0 296 067 B1**

# FASCICULE DE BREVET EUROPEEN

(45) Date de publication de fascicule du brevet: **15.04.92**

(51) Int. Cl.5: **E04C 2/24**, E04C 2/36, B32B 3/12, E04B 1/80

(21) Numéro de dépôt: **88401514.0**

(22) Date de dépôt: **17.06.88**

(54) **Panneau sandwich allégé destiné à la réalisation de structures multicouches résistant aux chocs et agressions thermiques.**

(30) Priorité: **19.06.87 FR 8708594**
**27.08.87 FR 8711971**

(43) Date de publication de la demande:
**21.12.88 Bulletin 88/51**

(45) Mention de la délivrance du brevet:
**15.04.92 Bulletin 92/16**

(84) Etats contractants désignés:
**BE CH DE ES FR GB IT LI NL**

(56) Documents cités:
EP-A- 0 155 599      DE-U- 7 819 334
FR-A- 1 524 796      FR-A- 2 157 393
FR-A- 2 242 635      FR-A- 2 266 594
US-A- 3 814 653      US-A- 4 421 827

(73) Titulaire: **GIAT Industries**
**13, route de la Minière**
**F-78034 Versailles Cédex(FR)**

(72) Inventeur: **Sanmartin, Marie-Louise**
**77, Avenue de Toulouse**
**F-65600 Semeac(FR)**
Inventeur: **Lepoetre, Pierre**
**6, Avenue du Mail Résidence du mail**
**F-02200 Soissons(FR)**

(74) Mandataire: **Célanie, Christian et al**
**GIAT Industries Direction Recherche et Développement 13 route de la Minière**
**F-78034 Versailles Cédex(FR)**

## Description

Le secteur technique de la présente invention est celui des panneaux sandwiches résistants aux chocs, aux flammes et aux agents de vieillissement des matériaux composites organiques et destinés à la fabrication de parois ou de cloisons multicouches.

Les panneaux sandwiches sont employés pour réaliser des structures possédant à la fois une grande rigidité, une faible masse, éventuellement une grande isolation thermique, et l'autoextinguibilité. Leurs applications sont multiples : bâtiment, aéronautique, industrie aérospatiale, construction marine, transport, armement, etc. Par ailleurs, les matériaux constitutifs peuvent être : des métaux (aluminium, titane, acier etc), des produits minéraux (béton alvéolaire, plâtre expansé ou non, etc), ou des matières plastiques (résines, composites organiques renforcés par fibres, etc).

Dans tous les cas, le panneau sandwich est le résultat de l'assemblage de deux semelles externe et interne constituées de matériaux à haute résistance mécanique et à haut module de déformabilité, et d'une âme de faible densité, jouant le rôle d'espaceur des semelles.

Les semelles sont réalisées à partir de tôles métalliques (Al, Ti, acier etc), ou de stratifiés constitués de couple résine + fibres (résines époxy, polyester, phénolique, vinylester, thermoplastique, associées à des fibres de verre, de carbone, d'aramide), ou de feuilles extrudées et/ou calandrées (thermoplastiques ou autres), ou de plaques de bois (contre-plaqués, etc), ou d'associations de plusieurs des matériaux précités (tôle d'aluminium et contre-plaqué par exemple).

Les âmes se divisent en trois grandes familles de matériaux :
- les produits expansés ou allégés, type mousses plastiques, bétons, etc,
- le bois (le balsa étant l'exemple type),
- les produits alvéolaires, type nid d'abeilles, espaceurs tubulaires, ou plaques nervurées autoraidies, etc.. Aux nids d'abeilles connus jusqu'ici (aluminium, aramide, pa pier kraft, etc..), est venue s'ajouter récemment une nouvelle famille en matériau thermoplastique oléfinique, insensible à la corrosion et au vieillissement. Cette famille offre des caractéristiques mécaniques sensiblement équivalentes à celles des matériaux en nid d'abeilles connus, mais à des coûts nettement plus faibles. Elle n'a pu être utilisée jusqu'alors dans le domaine des matériaux sandwiches structuraux parce qu'elle n'admet pas le collage ou la stratification sur les semelles habituelles. De plus, ces nids d'abeilles thermoplastiques oléfiniques posent des problèmes de liaison directe avec les plaques métalliques minces.

Quant au mode de fabrication des panneaux sandwiches, il est caractérisé par le type de liaison entre les semelles et l'âme.

Principalement, on distingue trois modes d'obtention des matériaux sandwiches :
- liaison par collage, par soudage, ou par accrochage mécanique, entre chaque semelle et l'âme,
- élaboration de la semelle directement au contact de l'âme, par moulage ou par stratification au contact (ex. béton, résine etc),
- expansion de l'âme, coulée in situ entre les deux semelles (ex. : plâtre expansé, mousses, etc).

Compte tenu de la diversité des produits constitutifs cités précédemment, il est possible de faire évoluer telle ou telle propriété du panneau en combinant préférentiellement les matériaux selon leurs propriétés les plus avantageuses.

Jusqu'à ce jour, les diverses constructions et structures constituées de panneaux élémentaires étaient réalisées en matériaux divers, seuls ou associés, présentant de notables inconvénients. En effet :
- les tôles métalliques minces accusent une déformation au moindre choc reçu perpendiculairement ou non à leur surface ; de plus, elles ne sont pas aisément réparables, et n'apportent aucune isolation thermique,
- les stratifiés supportent mal le flambage ; ils ne constituent pas un pare-feu, et n'apportent qu'assez peu d'isolation thermique,
- les plaques thermoplastiques ne résistent pas à l'élévation de température, ni aux flammes et ce pour des masses et coûts surfaciques acceptables,
- les nids d'abeilles et autres espaceurs tubulaires ne sont pas des isolants thermiques,
- les mousses synthétiques perdent leurs caractéristiques mécaniques lorsque la température à laquelle elles sont soumises s'élève au-delà de 80° à 100°C.

A titre indicatif, on pourra se reporter aux brevets EP-A-155 335 et 111 520.

Le brevet FR-A-2 242 635 décrit surtout un élément de construction porteur permettant d'obtenir des forces de pression et par suite des différences de pression afin d'augmenter la capacité de charge des plaques d'appui. La structure particulière de l'élément de construction semble comprendre une partie extérieure constituée de deux plaques métalliques entourant une couche intermédiaire de polyéthylène constituant une semelle externe. Cette partie extérieure est appliquée sur une structure complexe centrale par l'intermédiaire d'une couche en nid d'abeilles. La pression appliquée sur cet ensemble et le vide réalisé permet d'obtenir des éléments de construction ayant une rigidité et une résistance à la traction et au cisaillement augmentée. Il ne s'agit pas d'obtenir un panneau résistant au choc et agressions thermiques.

Le modèle DE-U-78 19 334 décrit la fabrication de plaque à plusieurs couches utilisables dans la construction automobile présentant une déformabilité améliorée, ce qui est à l'opposé du but recherché dans l'invention. On voit sur le dessin des plaques séparées par des entretoises, appliquées sur une mousse. Mais, il est spécifié que les plaques et les entretoises sont fabriquées de manière intégrale selon un procédé d'extrusion. Il n'y a donc pas assemblage de couches de nature différente.

Le brevet FR-A-2 266 594 décrit un matériau composite comprenant une âme en nid d'abeilles et deux revêtements. C'est donc le panneau lui-même qui possède cette structure et non pas la semelle qui est une simple couche.

La fabrication d'un panneau sandwich implique donc l'utilisation d'un certain nombre de matériaux en couches qu'il s'agit d'assembler, le plus souvent par collage ou par stratification.

On sait assembler un nid d'abeilles thermoplastique et un voile fibreux tissé ou non. Pour cela, on chauffe l'embase des alvéoles du nid d'abeilles thermoplastique et on force du matériau ainsi ramolli à pénétrer à travers les fibres du voile. Ceci est obtenu industriellement par défilement d'une plaque en nid d'abeilles thermoplastique placée sur la laize du voile, entre des rouleaux chauffants convenablement réglés en vitesse, en écartement et en température. Par refroidissement, on obtient un accrochage mécanique à la base des alvéoles du nid d'abeilles par coincement de la résine dans les interstices du voile. Cette technique n'apporte aucune propriété particulière au nid d'abeilles, hormis l'accrochage mécanique de ses faces, qui permet de disposer de surfaces planes de part et d'autre de ce nid d'abeilles pour faciliter les liaisons ultérieures.

D'autre part, il est très souvent utile d'insérer une feuille métallique dans un matériau sandwich pour améliorer ses propriétés d'isolation thermique et de résistance au vieillissement. Actuellement, on ne sait pas coller une feuille métallique nue directement sur un nid d'abeilles thermoplastique oléfinique.

La présente invention a pour but la réalisation d'un panneau sandwich résistant aux chocs et agressions thermiques dans lequel au moins une des semelles externes est elle-même un matériau sandwich. Elle a également pour but de fournir une semelle externe comprenant éventuellement une feuille métallique.

L'invention a donc pour objet un panneau sandwich structural résistant aux chocs et agressions thermiques, du type comportant une âme interposée entre deux semelles externe et interne, la semelle externe étant constituée d'un ensemble d'au moins trois couches solidaires entre elles par soudage, collage ou stratification, caractérisé en ce que :

- la première couche (4), externe, est réalisée en matière composite,
- la seconde couche (5) est constituée par une matière synthétique alvéolaire à faible coefficient de conductibilité thermique,
- la troisième couche (6), interne, est obtenue par stratification d'un matériau composite.

Les avantages de la présente invention réside dans le fait que le panneau sandwich est rigide, léger, de faible coût, autoextinguible, bon isolant thermique pour des expositions prolongées au soleil, et présente une bonne résistance à la flamme, ainsi qu'aux chocs.

Ces caractéristiques sont contrôlées par différents essais :

- essai de cisaillement, pour vérifier l'adhérence des semelles sur l'âme,
- essai de flexion, pour contrôler la rigidité en flexion et la tenue au poinçonnement,
- essai de tenue au feu, pour simuler le contact du matériau sandwich avec la flamme d'un chalumeau appliqué sur la semelle externe, et contrôler l'autoextinguibilité du matériau sandwich,
- essai de choc, pour vérifier la résistance à l'impact de la semelle du matériau sandwich,
- essai d'isolation thermique.

Le seconde couche est de préférence constituée par un nid d'abeilles en matière thermoplastique.

Le panneau comporte de préférence une feuille métallique interposé entre la seconde couche et la troisième couche.

On augmente ainsi le pouvoir isolant du panneau et il est possible d'utiliser des âmes en matériau expansé ou extrudé dont la température de transition vitreuse est basse, de l'ordre de 75°C, dans des panneaux qui peuvent être exposés à des températures nettement supérieures.

La présence de la feuille métallique apporte les avantages supplémentaires suivants :

- l'isolation thermique est améliorée : en effet, le film thermoplastique peut être suffisamment mince et transparent pour que le rayonnement qui traverse la deuxième couche soit réfléchi en majeure partie par la feuille métallique,
- elle améliore considérablement la résistance au vieillissement du panneau sandwich : en particulier, elle constitue une barrière étanche qui arrête les agents de ruine des matériaux organiques tels les agents climatiques en particulier, l'eau, les gaz, les microorganismes, les produits pétroliers et les produits de décontamination.

Le matériau composite des première et troisième couches est préférentiellement constitué par des résines armées de fibres de verre ou d'aramide.

La résine incorporée dans la première couche peut être choisie dans le groupe constitué par les résines époxy, polyester, phénoliques, et vinylester ignifugées ou phénoliques, et en ce que la résine incorporée dans la troisième couche est une résine époxy ignifugée.

La semelle externe peut présenter une épaisseur comprise entre 6 et 26 mm environ, l'épaisseur respective des première, seconde et troisième couches étant de 0,5 à 3 mm, 5 à 20 mm et 0,5 à 3 mm.

La seconde couche en nid d'abeilles peut être réalisée dans un matériau thermoplastique choisi dans le groupe constitué par le polypropylène, le polyéthylène et leurs copolymères, les polycarbonates, les polymères acrylonitryle/butadiène/styrène, les polyamides, les polysulfones ou polyéthersulfones et les polymères à cristaux liquides.

La seconde couche peut être constituée par une plaque en nid d'abeilles de polypropylène, un film en polyester non tissé étant disposé entre les première et seconde couches.

La seconde couche peut être constituée par une plaque en nid d'abeilles de polypropylène, un film de polyester non tissé étant disposé sur chacune des faces de la plaque.

Les alvéoles de la seconde couche peuvent être remplis d'un gaz inerte, tels l'argon ou l'azote, ou mis partiellement sous vide.

La feuille métallique peut être constituée par l'aluminium ou un alliage d'aluminium, l'acier ou le titane.

La feuille métallique adhère à la deuxième couche par cofusion de celle-ci avec un film thermoplastique.

Le film thermoplastique peut être constitué par du polyéthylène ou du polyester thermoplastique.

La feuille métallique peut être recouverte d'une couche fibreuse, tissée ou non, par exemple constituée de fibres de verre, de polyester ou de coton.

La feuille métallique peut présenter une épaisseur inférieure à 1 mm.

Le panneau peut comprendre un film d'aluminium de 0,1 mm d'épaisseur et un nid d'abeilles en polypropylène de 10 mm d'épaisseur.

L'âme peut être constituée par une plaque de mousse de polystyrène extrudé ou de polyuréthane, de polychlorure de vinyle ou de polyéthylène expansés, la semelle interne étant identique à la semelle externe ou constituée d'une plaque métallique, par exemple d'aluminium, ou d'une résine thermoplastique renforcée à l'aide de fibres de verre, de carbone ou d'aramide.

Le panneau peut comprendre :
- une semelle externe comprenant une première couche constituée de résine époxy ignifugée et de fibre de verre, une seconde couche constituée par un nid d'abeilles en polypropylène présentant sur ses deux faces un voile polyester non-tissé, la première couche étant stratifiée sur le voile non tissé, un film d'aluminium collé à 'aide d'une résine époxy sur le voile de la seconde couche, une troisième couche en composite résine époxy et fibres de verre stratifiée sur le film métallique,
- une âme en polyuréthane, polychlorure de vinyle, polyéthylène ou polystyrène expansés, collée sur la troisième couche,
- une semelle interne collée sur l'âme et constituée soit par une tôle métallique soit par la semelle externe.

Le procédé de fabrication d'un panneau sandwich selon l'invention est original en ce que les première et troisième couches sont réalisées séparément ou simultanément par stratification au contact de la deuxième couche pour constituer la semelle externe, l'âme et la semelle intérieure étant réunies à cette semelle extérieure par collage ou stratification, l'ensemble obtenu étant comprimé avant polymérisation de la résine de stratification.

Pour fabriquer une semelle incorporable dans un panneau sandwich selon l'invention
- on réalise d'abord un liaison par soudage entre la seconde couche et une feuille métallique en interposant un film thermoplastique et la seconde couche,
- on soumet l'ensemble à une pression comprise entre $10^5$ et $10^6$ Pa, pendant 1 à 5 secondes et à une température voisine de la température de fusion de la deuxième couche (5) et du film thermoplastique,
- on réalise ensuite par stratification ou collage les première et troisième couches.

Dans une variante du procédé, le film thermoplastique de polyéthylène peut être préalablement déposé sur la feuille métallique.

Dans une autre variante, la feuille métallique peut être prise en sandwich entre le film thermoplastique et une couche fibreuse tissée ou non.

Un avantage supplémentaire de l'invention réside dans la simplicité de mise en oeuvre industrielle du procédé de soudage de la feuille métallique sur le nid d'abeilles thermoplastique oléfinique en utilisant des machines classiques à rouleaux chauffants.

L'invention trouve une de ses applications chaque fois que l'on veut fabriquer industriellement un panneau sandwich structural tolérant aux dommages résultant d'agression par des chocs, des flammes et le viellissement, par exemple pour obtenir des parois de bâtiments, de bâteaux, de wagons, etc.. ayant une masse surfacique inférieure à 10 Kg/m$^2$. En particulier, on utilise un nid d'abeilles en matériau thermoplastique oléfinique vendu dans le commerce, peu coûteux, qui offre des caractéristiques mécaniques analogues à celles des matériaux alvéolaires connus, en alliage d'aluminium, en résine aramide ou phénolique, ou encore en papier.

D'autres avantages de l'invention de dégageront de la lecture du complément de description qui va suivre d'un mode de réalisation donné à titre d'exemple en relation avec un dessin sur lequel :
- la figure 1 illustre une coupe schématique du matériau sandwich selon l'invention,
- la figure 2 est une coupe montrant l'assemblage d'une feuille métallique et d'un nid d'abeilles,
- la figure 3 illustre la structure d'un exemple de réalisation d'un matériau sandwich selon l'invention montrant le détail de la semelle externe.

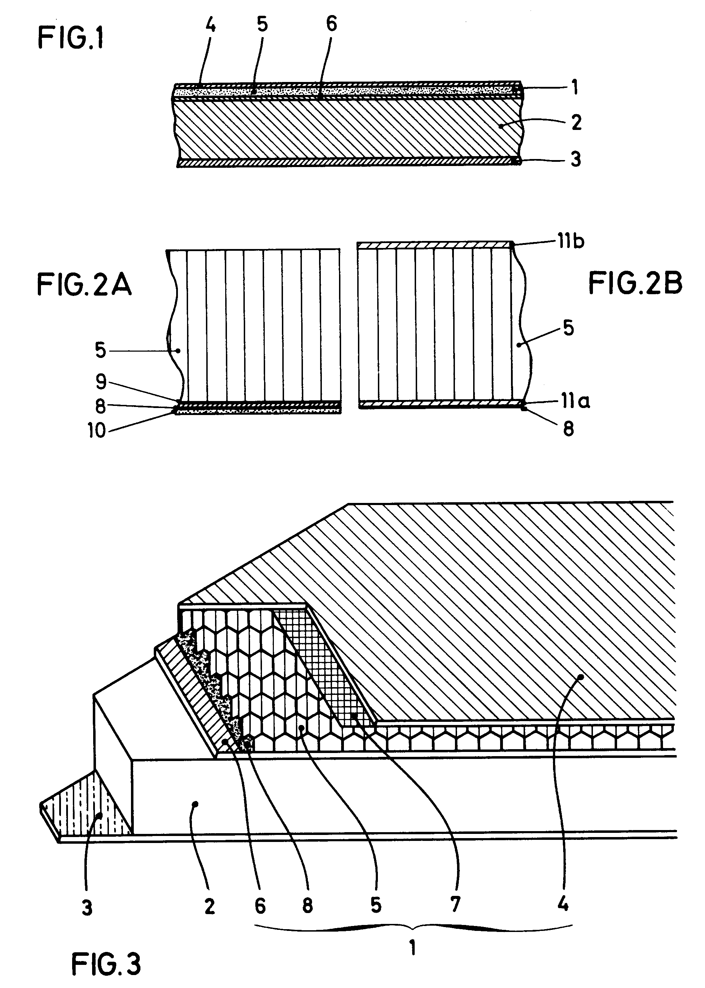

Sur la figure 1, on a représenté en coupe un panneau comprenant une semelle 1, une âme 2 et une semelle 3. La semelle 1 est dite externe, c'est-à-dire qu'elle est placée du côté exposé aux diverses agressions susceptibles d'intervenir. Bien entendu, la semelle interne 3 peut être identique à la semelle 1. Elle peut être classique, comme schématisée sur cette figure, c'est-à-dire constituée par une simple peau métallique du type aluminium, acier ou titane, ou bien en matériau synthétique du type thermoplastique, tel le polychlorure de vinyle ou en composite, tel un stratifié en résine associé à des fibres de verre, de carbone, d'aramide...

L'âme 2 est réalisée à l'aide d'une plaque de polystyrène extrudé du commerce ou de polyuréthane du commerce, du polychlorure de vinyle ou du polyéthylène expansés.

La semelle 1 est constituée par un système multicouche de faible épaisseur, d'au moins 5 mm. Elle comprend une première couche 4 ou peau externe, une deuxième couche 5 et une troisième couche 6 ou peau interne.

La couche 4, de quelques millimètres d'épaisseur, est réalisée par stratification d'une résine thermodurcissable ignifugée et de renforts (fibres de verre, de carbone, d'aramide, ou d'autres fibres). Une tôle métallique mince peut même être envisagée, si les problèmes de tenue au choc ou de possibilité de réparation ne se posent pas. Si d'autre part, la tenue au feu n'est pas primordiale, une peau en résine thermoplastique donne satisfaction. On choisira avantageusement une épaisseur comprise entre 0,5 et 3 mm et plus particulièrement entre 1 et 2 mm. La résine thermodurcissable est choisie parmi les résines époxy, polyester ou phénolique, éventuellement teintée en couleur foncée, par exemple noire, pour limiter le rayonnement thermique interne de cette couche.

La seconde couche 5, de quelques millimètres à quelques centimètres d'épaisseur, par exemple d'au moins 5 mm et en particulier de 5 à 20 mm, est réalisée en un matériau à forte résistance en compression.

Selon l'application pratique réelle du matériau, il sera demandé à cette couche 5 de ne dégager aucun gaz ou fumée toxique lors de sa combustion, et d'avoir un faible coefficient de conductibilité thermique. La couche 5 sera donc, dans ce cas, un produit alvéolaire, type nid d'abeilles en matière thermoplastique du type polypropylène ou en polymère acrylonitrile/butadiène/styrène ou en polycarbonate, etc.. Les alvéoles peuvent avantageusement contenir un gaz inerte (azote, argon, etc...) ou être mis sous vide partiel, selon une technique qu'il n'est pas nécessaire d'expliciter pour la compréhension de l'invention.

La définition de la couche 6 peut être la même que celle de la couche 4. Lorsqu'elle est exposée au rayonnement solaire ou à une source de chaleur, la face de la couche 6 adjacente à la couche 5 rayonne de l'énergie vers la couche 4. Il est avantageux d'augmenter le coefficient d'émission thermique de cette face, en disposant, par exemple fig.2A, un film d'aluminium 8 à l'interface entre la couche 5 et la couche 6. L'absorption du rayonnement thermique de la couche 6 est ainsi diminuée, et celle-ci reste donc plus longtemps froide. En variante, le film d'aluminium peut être revêtu d'un matériau thermoplastique filmogène qui est soudé par compression à chaud sur la couche 5. Le film poli 8 d'aluminium est rendu adhérant à la couche 5, constituée d'un nid d'abeilles en polypropylène, par l'intermédiaire d'une couche 9 de polyéthylène. La nature de la couche 9 est ici de la même famille chimique que celle de la couche 5, mais elle pourrait être différente. Il suffit que ces couches soit réalisées dans des matériaux compatibles entre eux sur le plan des paramètres de soudage. Ces couches peuvent être utilisées séparément, mais on préfère utiliser un produit du commerce comme montré sur la figure 2A comprenant le film d'aluminium sur lequel est déjà fixé d'un côté la couche 9 de polyéthylène et de l'autre une couche 10 en coton. On applique le film d'aluminium 8 sur le nid d'abeilles 5, côté film polyéthylène 9, puis on soumet l'ensemble à une pression d'environ 2.10$^5$ Pa et à une température de l'ordre de 220° C pendant 2 s. Par ce procédé, on réalise la fusion, à cette température, de la couche de polyéthylène et de polypropylène adjacent, qui crée une liaison rigide entre le film d'aluminium et le nid d'abeilles.

La fusion du film thermoplastique est totale au droit de l'embase des alvéoles, tandis que la fusion du nid d'abeilles thermoplastique ne concerne que sa couche superficielle. On utilise une machine du type laminoir dans laquelle la température peut être ajustée, le temps nécessaire au soudage étant réglé en jouant sur la vitesse de rotation des rouleaux.

Bien entendu, la couche 9 de polyéthylène pourrait être d'abord déposée sur le nid d'abeilles, puis la feuille métallique, sans modification notable du procédé, avant introduction dans la machine.

On peut encore utiliser, comme montré sur la figure 2B, une couche 5 en nid d'abeilles munie sur ses deux faces d'un voile 11a et 11b non tissé polyester ; ce produit est vendu dans le commerce. Sur le voile 11a, on colle la feuille métallique nue 8, puis on stratifie directement la couche 6 sur cette feuille métallique. Les couches 9 et 10 de l'exemple selon la figure 2A sont alors supprimées.

Selon l'application envisagée, le film d'aluminium peut être remplacé par un film métallique quelconque, par exemple en acier ou en titane.

Lorsqu'on réalise le soudage du film thermoplastique 9 et de la couche superficielle du nid d'abeilles, la température de fusion varie suivant la nature de ce film et de celle du nid d'abeilles. Compte tenu des essais effectués sur les matériaux disponibles dans le commerce, on a déterminé que le domaine de température dans lequel on opère se situe entre environ 150 et 250°C. Il suffit donc que les matériaux aient leurs paramètres thermiques de soudage compatibles entre eux, dans une plage de l'ordre de 10°, sans que cela modifie sensiblement la qualité de la liaison rigide obtenue.

L'ensemble des couches 4, 5, 6 et du film aluminium 8, est assemblé par collage, stratification ou soudage, le tout formant la semelle 1.

Les autres couches, âme 2 en polystyrène extrudé de 3 à 5 cm d'épaisseur, et semelle 3 du panneau sandwich, sont collées ou stratifiées sur la semelle 1 de façon connue.

EXEMPLE DE REALISATION

Sur la figure 3, on a représenté un panneau sandwich dont les diverses couches sont assemblées en réalisant d'abord la semelle 1, de l'extérieur vers l'intérieur. Cet ordre n'est pas impératif et pourra être modifié de façon évidente par l'homme de métier.

- Semelle externe 1 :

Elle se présente sous la forme d'une structure multicouche formée par les couches 4, 5 et 6. La couche 4 est en matériau composite, constituée de résine époxy ignifugée et de fibres de verre, d'un épaisseur de l'ordre de 1,5 mm. La couche 5 est un nid d'abeilles en polypropylène de 10 mm d'épaisseur, dont la face, côté couche 4, est revêtue d'un film 7 en polyester non tissé, de 0,2 mm d'épaisseur.

La stratification de la couche 4 se fait directement en contact avec la couche 5 en nid d'abeilles, du côté de la couche 7 en polyester non tissé. La liaison de la couche 4 avec la couche 5 est ainsi immédiate.

Sur l'autre face de la couche 5 en nid d'abeilles, on dépose par soudage le film tricouche polyéthylène/aluminium/coton 9, 8, 10 ainsi ordonné. Par soudage, on crée une liaison entre le polypropylène du nid d'abeilles et la couche polyéthylène 9 du film. Ce film tricouche a une épaisseur de l'ordre de 0,3 mm.

En variante, on peut utiliser une plaque de nid d'abeilles munie sur ses deux faces d'un voile de non tissé polyester. Sur une des faces, on stratifie la couche 4 et sur l'autre, on colle la feuille métallique 8 à l'aide d'une résine époxy conformément à la figure 2B.

On réalise ensuite par stratification la couche 6 en composite résine époxy/fibres de verre, présentant une épaisseur de l'ordre de 1 mm. La stratification se fait directement soit sur la toile 10 de coton du film tricouche 8, 9, 10, soit sur la feuille métallique nue conformément à la figure 2B. L'épaisseur de la semmelle est donc de 13 mm.

- Ame 2 :

L'âme 2, de 30 mm d'épaisseur, est constituée d'une plaque en polystyrène extrudé. Elle est déposée sur la couche 6 avant polymérisation de la résine époxy. Par compression et après polymérisation, l'âme 2 devient solidaire de cette couche 6. Cette âme peut être réalisée avec du polyuréthane, du polychlorure de vinyle ou du polyéthylène expansés. Tous ces matériaux ont une température de transition vitreuse de l'ordre de 75°C.

- Semelle intérieure 3 :

On colle enfin, sur l'autre face de l'âme 2, une tôle 3 de 1 mm d'épaisseur en alliage d'aluminium.

Ce panneau présente donc une épaisseur totale de d'ordre de 44 mm. Lorsqu'il comporte une semelle interne identique à la semelle externe, l'épaisseur totale est de 56 mm.

Un tel panneau a une masse surfacique inférieure à 10 kg/m² et possède de bonnes caractéristiques de :
- rigidité,
- tenue à la température,
- isolation thermique,

- tenue au choc de la semelle,
- tenue au flambage de la semelle,
- tenue au poinçonnement de la semelle,
- autoextinguibilité,

Sur un panneau conforme à la figure 3, on a procédé à des essais de flexion, de cisaillement, de comportement au feu, de choc, d'isolation thermique, d'ensoleillement et d'inflammabilité montrant l'intérêt de ce type de structure.

## ESSAI DE FLEXION

On soumet un panneau de 750 mm de longueur et de 400 mm de large reposant sur deux cylindres de 50 mm de rayon à une compression en son milieu. La charge minimale à la rupture obtenue est de 11 000 N.

## ESSAI DE CISAILLEMENT

On immobilise le panneau au niveau de l'âme et on exerce une traction à l'aide d'un mors sur la semelle externe 1 avec une vitesse de $4,2.10^{-4}$ m/s. La contrainte minimale à la rupture par cisaillement obtenue est de $3.10^5$ Pa.

### ESSAI DE CHOC

On laisse tomber une bille de 3 Kg d'une hauteur de 2 m sur la semelle externe 1 d'un panneau reposant sur un cadre en bois. Après de nombreux essais, on ne constate aucune déformation à l'endroit des impacts. Seul un très faible délaminage de la couche 4 à l'endroit des impacts est détecté.

### COMPORTEMENT AU FEU

Une flamme à 1 000 °C est appliquée perpendiculairement à un panneau de 600 mm x 600 mm, pendant 72 secondes sur la semelle externe 1. Après retrait de la flamme, on mesure le temps d'extinction qui est inférieur à 10 secondes.

## ESSAI D'ISOLATION THERMIQUE

On réalise un caisson isolant à l'aide de panneaux que l'on expose au soleil durant une journée. On constate que la température à l'intérieur du caisson reste toujours inférieure à la température d'utilisation de l'âme 2, qui est de 75°C environ. D'autre part, la température à l'intérieur du caisson n'évolue pas de façon sensible, ce qui permet d'apprécier le pouvoir isolant du panneau.

En effet, lors d'une exposition au soleil, la couche 4, directement soumise au rayonnement absorbe de l'énergie et donc s'échauffe et elle rayonne de l'énergie de façon proportionnelle à sa température.

La partie du rayonnement émise vers l'intérieur du panneau traverse le nid d'abeilles 5, et vient se réfléchir sur l'aluminium du film 8. Ce rayonnement est absorbé de nouveau par la couche 4.

De cette façon, la couche 4 rayonne vers l'extérieur, tandis que la couche 6 reste froide. La température de la mousse constituant l'âme 2 reste nettement inférieure à sa température d'utilisation (75°C). Le seul échange de chaleur vers l'intérieur du panneau se fait par convection. L'introduction dans les alvéoles d'un gaz à faible conductivité thermique comme l'azote ou l'argon, améliore encore l'isolation thermique de la structure sandwich.

## ESSAI D'INFLAMMABILITE

Lors d'une exposition au chalumeau, la résine de la couche 4, même ignifugée, se consume et le polypropylène du nid d'abeilles de la couche 5 fond superficiellement. La couche 6 n'est pas détériorée. La mousse de l'âme 2 en polystyrène reste intacte. La combustion s'arrête totalement dès le retrait de la flamme. La zone endommagée est alors réparable.

Le panneau selon l'invention peut être utilisé dans tout type de construction :
- des parois d'hôpital modulaire d'intervention,
- des panneaux de cadres, d'abris techniques mobiles en particulier de shelters,
- de structures rigides légères pour les moyens de transport (naval, ferroviaire, aérien, routier),
- des conteneurs antichocs et antifeu pour objets précieux, oeuvres d'art, matières fissiles.

## Revendications

1. Panneau sandwich structural résistant aux chocs et agressions thermiques, du type comportant une âme (2) interposée entre deux semelles externe (1) et interne (3), la semelle externe (1) étant constituée d'un ensemble d'au moins trois couches solidaires entre elles par soudage, collage ou stratification, caractérisé en ce que :
   - la première couche (4), externe, est réalisée en matière composite,
   - la seconde couche (5) est constituée par une matière synthétique alvéolaire à faible coefficient de conductibilité thermique,
   - la troisième couche (6), interne, est obtenue par stratification d'un matériau composite.

2. Panneau selon la revendication 1, caractérisé en ce que la seconde couche (5) est constituée par un nid d'abeilles en matière thermoplastique.

3. Panneau selon la revendication 1 ou 2, caractérisé en ce qu'il comporte une feuille métallique (8) interposée entre la seconde couche (5) et la troisième couche (6).

4. Panneau selon l'une quelconque des revendications précédentes, caractérisé en ce que le matériau composite des première (4) et troisième (6) couches est constitué par des résines armées de fibres de verre ou d'aramide.

5. Panneau selon la revendication 4, caractérisé en ce que la résine incorporée dans la première couche (4) est choisie dans le groupe constitué par les résines époxy, polyester, phénoliques, et vinylester ignifugées ou phénoliques, et en ce que la résine incorporée dans la troisième couche (6) est une résine époxy ignifugée.

6. Panneau selon l'une quelconque des revendications précédentes, caractérisé en ce que la semelle externe présente une épaisseur comprise entre 6 et 26 mm environ, l'épaisseur respective des première (4), seconde (5) et troisième (6) couches étant de 0,5 à 3mm, 5 à 20 mm et 0,5 à 3mm.

7. Panneau selon l'une quelconque des revendications 1 à 6, caractérisé en ce que la seconde couche (5) en nid d'abeilles est réalisée dans un matériau thermoplastique choisi dans le groupe constitué par le polypropylène, le polyéthylène et leurs copolymères, les polycarbonates, les polymères acrylonitryle/butadiène/styrène, les polyamides, les polysulfones ou polyéthersulfones et les polymères à cristaux liquides.

8. Panneau selon la revendication 7, caractérisé en ce que la seconde couche (5) est constituée par une plaque en nid d'abeilles de polypropylène, un film (7) en polyester non tissé étant disposé entre les première (4) et seconde (5) couches.

9. Panneau selon la revendication 7, caractérisé en ce que la seconde couche (5) est constituée par une plaque en nid d'abeilles de polypropylène, un film de polyester non tissé (11a, 11b) étant disposé sur chacune des faces de la plaque.

10. Panneau selon l'une quelconque des revendications 2 à 9, caractérisé en ce que les alvéoles de la seconde couche (5) sont remplis d'un gaz inerte, tels l'argon ou l'azote, ou mis partiellement sous vide.

11. Panneau selon l'une quelconque des revendications 3 à 10, caractérisé en ce que la feuille métallique (8) est constituée par l'aluminium ou un alliage d'aluminium, l'acier ou le titane.

12. Panneau selon la revendication 1, caractérisé en ce que la feuille métallique (8) adhère à la deuxième couche (5) par cofusion de celle-ci avec un film thermoplastique (9).

13. Panneau selon la revendication 12, caractérisé en ce que le film thermoplastique (9) est constitué par du polyéthylène ou du polyester thermoplastique.

14. Panneau selon l'une quelconque des revendications 3 à 13, caractérisé en ce que la feuille métallique (8) est recouverte d'une couche fibreuse (10), tissée ou non, par exemple constituée de fibres de verre, de polyester ou de coton.

15. Panneau selon l'une quelconque des revendications 3 à 15, caractérisé en ce que la feuille métallique (8) présente une épaisseur inférieure à 1 mm.

16. Panneau selon la revendication 15, caractérisé en ce qu'il comprend un film d'aluminium (8) de 0,1 mm d'épaisseur et un nid d'abeilles (5) en polypropylène de 10 mm d'épaisseur.

17. Panneau selon l'une quelconque des revendications précédentes, caractérisé en ce que l'âme (2) est constituée par une plaque de mousse de polystyrène extrudé ou de polyuréthane, de polychlorure de vinyle ou de polyéthylène expansés, la semelle interne (3) étant identique à la semelle externe (1) ou constituée d'une plaque métallique, par exemple d'aluminium, ou d'une résine thermoplastique renforcée à l'aide de fibres de verre, de carbone ou d'aramide.

18. Panneau selon l'une quelconque des revendications 3 à 17, caractérisé en ce qu'il comprend :
   - une semelle externe (1) comprenant une première couche (4) constituée de résine époxy ignifugée et de fibre de verre, une seconde couche (5) constituée par un nid d'abeilles en polypropylène présentant sur ses deux faces un voile polyester non-tissé (11a, 11b), la première couche (4) étant stratifiée sur le voile non tissée (11b), un film d'aluminium (8) collé à l'aide d'une résine époxy sur le voile (11a) de la seconde couche (5), une troisième couche (6) en composite résine époxy et fibres de verre stratifiée sur le film métallique (8),
- une âme (2) en polyuréthane, polychlorure de vinyle, polyéthylène ou polystyrène expansés, collée sur la troisième couche (6),
- une semelle interne (3) collée sur l'âme (2) et constituée soit par une tôle métallique soit par la semelle externe (1).

19. Procédé de fabrication d'un panneau sandwich selon l'une quelconque des revendications 1 à 19, caractérisé en ce que les première (4) et troisième (6) couches sont réalisées séparément ou simultanément par stratification au contact de la deuxième couche (5) pour constituer la semelle externe (1), l'âme (2) et la semelle intérieure (3) étant réunies à cette semelle extérieure par collage ou stratification, l'ensemble obtenu étant comprimé avant polymérisation de la résine de stratification.

20. Procédé de fabrication d'une semelle pour panneau sandwich selon l'une quelconque des revendications 3 à 17, caractérisé en ce que :
- on réalise d'abord une liaison par soudage entre la seconde couche (5) et une feuille métallique (8) en interposant un film thermoplastique (9) et la seconde couche (5),
- on soumet l'ensemble à une pression comprise entre $10^5$ et $10^6$ Pa, pendant 1 à 5 secondes et à une température voisine de la température de fusion de la deuxième couche (5) et du film thermoplastique (9),
- on réalise ensuite par stratification ou collage les première (4) et troisième (6) couches.

21. Procédé selon la revendication 20, caractérisé en ce que le film thermoplastique (9) de polyéthylène est préalablement déposé sur la feuille métallique (8).

22. Procédé selon la revendication 20, caractérisé en ce que la feuille métallique (8) est prise en sandwich entre le film thermoplastique (9) et une couche fibreuse (10) tissée ou non.

**Claims**

1. Structural sandwich panel that resists impacts and thermal damage, of the type comprising a core (2) intercalated between two skins, one external (1) and the other internal (3), the external skin (1) being formed from an assembly of at least three layers that are made rigid with each other by welding, bonding or lamination characterized in that:
- the first layer (4) , at the end, is made from composite material,
- the second layer (5) is formed from a cellular synthetic material with a low thermal conductivity coefficient
- the third layer (6), inside, is created by lamination of a composite layer.

2. Panel according to claim 1, characterized in that the second layer (5) is formed from a honeycomb made from thermoplastic material.

3. Panel according to claim 1 or 2, characterized in that it comprises a metal sheet (8) interposed between the second layer (5) and the third layer (6)

4. Panel according to any one of the foregoing claims characterized in that the composite material of the first (4) and third (6) layers is formed from glass or aramid fibre reinforced resins.

5. Panel according to claim 4, characterized in that the resin incorporated in the first layer (4) is chosen from a group made up of the epoxy, polyester, phenolic and fireproofed or phenolic vinyl ester resins and in that the resin incorporated in the third layer (6) is a fireproofed epoxy resin.

6. Panel according to any one of the foregoing claims characterized in that the external skin is between approximately 6 and 26 mm thick, the thickness of the first (4), second (5) and third (6) layers being between 0.5 and 3 mm, 5 and 20 mm and 0.5 and 3 mm respectively.

7. Panel according to any one of claims 1 - 6 characterized in that the second layer (5) made from honeycomb is made from a thermoplastic material chosen from the group made up of polypropylene, polyethylene and their copolymers, polycarbonates acrylonitrile/butadiene/styrene polymers, polyamides, polysulphones or polyethersulphones and liquid crystal polymers.

8. Panel according to claim 7, characterized in that the second layer (5) is formed from a polypropylene honeycomb sheet, a non woven polyester film (7 ) being arranged between the first (4) and second (5) layers

9. Panel according to claim 7, characterized in that the second layer (5) is formed from a polypropylene honeycomb sheet, a non woven polyester mat (11a, 11b) being arranged on each of the faces of the sheet.

10. Panel according to any one of claims 2 - 9 characterized in that the cells of the second layer (5) are filled with an inert gas, such as argon or nitrogen, or put under partial vacuum.

11. Panel according to any one of claims 3 - 10 characterized in that the metal sheet (8) is made from aluminum or an aluminum alloy, steel or titanium.

12. Panel according to claim 11, characterized in that the metal sheet (8) adheres to the second layer (5) by cofusion of this with a thermoplastic film (9)

13. Panel according to claim 12, characterized in that the thermoplastic film (9) is formed from thermoplastic polyethylene or polyester.

14. Panel according to any one of claims 3 - 13 characterized in that the metal sheet (8) is covered with a fibrous layer (10), either woven or non woven, for example, made from glass, polyester or cotton fibres.

15. Panel according to any one of claims 3 - 15 characterized in that the metal sheet (8) is less than 1 mm thick.

16. Panel according to claim 15, characterized in that it comprises an aluminium film (8) 0.1 mm thick and a polypropylene honeycomb (5) 10 mm thick.

17. Panel according to any one of the foregoing claims characterized in that the core (2) is made up of an extruded polystyrene foam sheet or expanded polyurethane, PVC or polyethylene sheet, the internal skin (3) being identical to the external skin (1) or made up of a metal sheet, for example an aluminium one or of a glass, carbon or aramid fibre reinforced thermoplastic resin.

18. Panel according to any one of claims 3 - 17 characterized in that it comprises:
    - an external skin (1) comprising a first layer (4) made from fireproofed epoxy resin and glass fibre, a second layer (5) made up of a polypropylene honeycomb with a non woven polyester mat on both its faces (11a and 11b), the first layer (4) being laminated onto the non woven mat (11b), an aluminium film (8) bonded used epoxy resin on the mat (11a) of the second layer (5), a third layer (6) made from epoxy resin and glass fibre composite laminated on the metal film (8),
    - a core (2) made from expanded polyurethane, PVC, polyethylene or polystyrene, bonded onto the third layer (6),
    - an internal skin (3) bonded onto the core (2) and made up of either a metal sheet or by the external skin (1)

19. Process for making a sandwich panel according to any of claims 1 - 19, characterized in that the first (4) and third (6) layers are made either separately or simultaneously by contact lamination of the second layer (5) to make the external skin (1), the core (2) and the internal skin (3) being joined to this external skin by bonding or laminating, the assembly created being compressed prior to polymerization of the lamination resin.

20. Process for making a skin for a sandwich panel according to any one of claims 3 - 17 characterized in that:
    - a welding join is first made between the second layer (5) and a metal sheet (8) by intercalating a thermoplastic film (9) and the second layer (5),
    - the assembly is subjected to a pressure of between $10^5$ and $10^6$ Pa, for 1 - 5 seconds at a temperature near to the melting temperature of the second layer (5) and of the thermoplastic film (9),
    - then the first (4) and third (6) layers are made by lamination or bonding

21. Process according to claim 20, characterized in that the thermoplastic polyethylene film (9) is previously deposited on the metal sheet (8)

22. Process according to claim 20, characterized in that the metal sheet (8) is sandwiched between the thermoplastic film (9) and a woven or non woven fibrous layer (10).

**Patentansprüche**

1. Wetterbeständige Verbund-Sandwichplatte mit einem zwischen zwei äusseren (1) und inneren (3) Sohlen eingefügtem Kern (22), wobei die äussere Sohle (1) aus einer Einheit von mindestens drei durch Schweissen, Verkleben oder Laminieren gebildeten Schichten besteht, dadurch gekennzeichnet, dass:
    - die erste, äussere Schicht (4) aus Verbundmaterial besteht,

- die zweite Schicht (5) aus einem wabenförmigen, synthetischen Werkstoff mit einem geringen Wärmeleitungskoeffizienten besteht,
- die dritte, innere Schicht (6) durch Stratifikation eines Verbundmaterials hergestellt wird.

2. Platte nach dem Anspruch 1, dadurch gekennzeichnet, dass die zweite Schicht (5) aus einer Thermoplastwabe besteht.

3. Platte nach einem der Ansprüche 1 oder 2, dadurch gekennzeichnet, dass sie zwischen der zweiten Schicht (5) und der dritten Schicht (6) mit einer Metallfolie (8) versehen ist.

4. Platte nach einem der vorangehenden Ansprüche, dadurch gekennzeichnet, dass das Verbundmaterial der ersten (4) und der dritten (6) Schicht aus glasfaser- oder aramidhaltigen Harzen besteht.

5. Platte nach dem Anspruch 4, dadurch gekennzeichnet, dass das in der ersten Schicht (4) enthaltene Harz in der aus flammenhemmenden oder phenolischen Epoxy-, Polyester-, Phenol- und Vinylesterharzen gebildeten Gruppe gewählt wird, und dass das in der dritten Schicht (6) eingefügte Harz ein flammenhemmendes Epoxyharz ist.

6. Platte nach einem der vorangehenden Ansprüche, dadurch gekennzeichnet, dass die äussere Sohle ungefähr zwischen 6 und 26 mm dick ist, wobei die jeweiligen Dicken der ersten (4), zweiten (5) und dritten (6) Schicht 0,5 bis 3 mm, 5 bis 20 mm und 0,5 bis 3 mm betragen.

7. Platte nach einem der Ansprüche 1 bis 6, dadurch gekennzeichnet, dass die zweite, wabenförmige Schicht (5) aus einem Thermoplaststoff besteht, das in der aus Polypropylen, Polyäthylen und ihren Kopolymeren, Polycarbonaten, Acrylnitril-Acrylester-Polymeren, Polyamiden, Polysulfonen oder Polyethersulfonen und Flüssigkristallpolymeren gebildeten Gruppe gewählt wird.

8. Platte nach dem Anspruch 7, dadurch gekennzeichnet, dass die zweite Schicht (5) aus einer wabenförmigen Polypropylenplatte besteht, wobei zwischen der ersten (4) und der zweiten (5) Schicht eine nichtgewebte Polyesterfolie (7) eingefügt ist.

9. Platte nach dem Anspruch 7, dadurch gekennzeichnet, dass die zweite Schicht (5) aus einer wabenförmigen Polypropylenplatte besteht, wobei jede Plattenseite mit einer nichtgewebten Polyesterfolie (11a, 11b) versehen ist.

10. Platte nach einem der Ansprüche 2 bis 9, dadurch gekennzeichnet, dass die Waben der zweiten Schicht (5) mit Schutzgas, wie Argon oder Stickstoff, gefüllt oder teilweise unter Vakuum gesetzt sind.

11. Platte nach einem der Ansprüche 3 bis 10, dadurch gekennzeichnet, dass die Metallfolie (8) aus Aluminium oder aus einer Aluminiumlegierung, aus Stahl oder Titan besteht.

12. Platte nach dem Anspruch 11, dadurch gekennzeichnet, dass die Metallfolie (8) durch Verschmelzung mit einer Thermoplastfolie (9) auf der zweiten Schicht (5) haftet.

13. Platte nach dem Anspruch 12, dadurch gekennzeichnet, dass die Thermoplastfolie (9) aus Polyäthylen oder Thermoplast-Polyester besteht.

14. Platte nach einem der Ansprüche 3 bis 13, dadurch gekennzeichnet, dass die Metallfolie (8) von einer gewebten oder nicht gewebten Faserschicht (10) überzogen ist, zum Beispiel aus Glasfasern, Polyester oder Baumwolle.

15. Platte nach einem der Ansprüche 3 bis 15, dadurch gekennzeichnet, dass die Metallfolie (8) weniger als 1 mm dick ist.

16. Platte nach dem Anspruch 15, dadurch gekennzeichnet, dass sie eine 0,1 mm dicke Aluminiumfolie (8) und eine 10 mm dicke Polypropylenwabe (5) enthält.

17. Platte nach einem der vorangehenden Ansprüche, dadurch gekennzeichnet, dass der Kern (2) aus einer extrudierten Polystryren- oder Polyurethan-, einer expandierten Polyvinylchlorid- oder Polyäthylenschaumplatte besteht, wobei die innere Sohle (3) mit der äusseren Sohle (1) identisch ist, oder aus einer Metallplatte, zum Beispiel aus Aluminium, oder einem mit Glasfasern, Kohlenstoff oder Aramid verstärktem Thermoplastharz besteht.

18. Platte nach einem der Ansprüche 3 bis 17, dadurch gekennzeichnet, dass sie wie folgt zusammengesetzt ist:
- einer äusseren Sohle (1) mit einer ersten Schicht (4) aus flammenhemmendem Epoxyharz und Glasfasern, mit einer zweiten Schicht (5) aus Polypropylenwaben und beidseitig mit nicht gewebtem Polyester beschichtet (11a, 11b), wobei die erste Schicht (4) auf dem nicht gewebten Schleier (11b) laminiert ist, einer mittels einem Epoxyharz auf dem Schleier (11a) der zweiten Schicht geklebten Aluminiumfolie (8), einer dritten Schicht (6) aus Epoxyharz und Glasfasern, die auf der Metallfolie (8) laminiert ist,

- einem auf die dritte Schicht (6) geklebten Kern (2) aus Polyurethan, Polyvinylchlorid, expandiertem Polyäthylen oder Polystyren,

- einer auf den Kern (2) geklebten inneren Sohle (3), die entweder aus einem Metallblech oder aus der äusseren Sohle (1) gebildet wird.

19. Herstellungsverfahren einer Sandwichplatte nach einem der Ansprüche 1 bis 19, dadurch gekennzeichnet, dass die erste (4) und die dritte (6) Schicht getrennt oder gleichzeitig durch Stratifikation in Berührung mit der zweiten Schicht (5) erstellt werden, um die äussere Sohle zu bilden, wobei der Kern (2) und die innere Sohle (3) mit dieser äusseren Sohle durch Verkleben oder Stratifikation verbunden werden, wobei die so erhaltene Einheit vor Polymerisation des Stritifikationsharzes zusammengedrückt wird.

20. Herstellungsverfahren einer Sohle für Sandwichplatten nach einem der Ansprüche 3 bis 17, dadurch gekennzeichnet, dass:

- man zunächst eine Schweissverbindung zwischen der zweiten Schicht (5) und einer Metallfolie (8) durch Einfügen einer Thermoplastfolie (9) herstellt,

- man die Einheit während 1 bis 5 Sekunden einem Druck zwischen $10^5$ und $10^6$ Pa und einer Temperatur aussetzt, die in der Nähe der Verschmelzungstemperatur der zweiten Schicht (5) und der Thermoplastfolie (9) liegt,

- man dann die erste (4) und dritte (6) Schicht durch Stratifikation oder Kleben herstellt.

21. Verfahren nach dem Anspruch 20, dadurch gekennzeichnet, dass die Polyäthylen-Thermoplastfolie (9) vorher auf eine Metallfolie (8) aufgebracht wird.

22. Verfahren nach dem Anspruch 20, dadurch gekennzeichnet, dass die Metallfolie (8) sandwichförmig zwischen der Thermoplastfolie (9) und einer gewebten oder nicht gewebten Faserschicht (10) eingeschlossen ist.

FIG.1

4  5  6

1

2

3

FIG.2A

FIG.2B

11b

5

5

9

8

10

11a

8

FIG.3

3  2  6  8  5  7  4

1